# EUROPÄISCHE PATENTSCHRIFT

(11) **EP 3 170 608 B1**
(45) Veröffentlichungstag und Bekanntmachung des Hinweises auf die Patenterteilung: **05.05.2021**
(21) Anmeldenummer: 16198906.6
(22) Anmeldetag: 15.11.2016
(51) Int. Cl.: B23K 11/10, B23K 11/36, B23K 37/00

(54) **SCHWEISSKAPPEN-KÜHLWASSERSTEUERUNG**
WELDING CAP COOLING WATER CONTROL
COMMANDE D'EAU DE REFROIDISSEMENT DE CAPUCHON DE SOUDAGE

(30) Priorität: 23.11.2015 DE 102015120222
(43) Veröffentlichungstag der Anmeldung: 24.05.2017
(73) Patentinhaber: Bürkert Werke GmbH, 74653 Ingelfingen (DE)
(72) Erfinder: LOTHA, Hartmuth, 74635 Kupferzell (DE); STRAUB, Jürgen, 74229 Oedheim (DE)
(74) Vertreter: Prinz & Partner mbB

(56) Entgegenhaltungen:
- WO-A2-88/09574
- DE-A1-102013 200 994
- DE-U1-202007 011 304

## Beschreibung

Die Erfindung betrifft eine Schweißkappen-Kühlwassersteuerung, mit einer Kühlwasserleitung, die einen in Richtung zur zumindest einer Schweißkappe führenden Kühlwasserzulauf und einen von der Schweißkappe wegführenden Kühlwasserrücklauf hat, wobei im Kühlwasserrücklauf ein schaltbares Steuerventil zum Verschließen des Kühlwasserrücklaufs bei Kappenwechsel sowie zumindest ein Durchflusssensor vorgesehen sind.

Roboter-Punktschweißanlagen sind insbesondere in der Automobilindustrie im Einsatz und müssen hohen Qualitätsansprüchen gerecht werden. Eine hohe, bis zu 100 % erforderliche Verfügbarkeit erfordert eine maximale Zuverlässigkeit aller Komponenten. Die Schweißkappen unterliegen hohen thermischen Beanspruchungen und Verschleiß und werden durch Kühlwasser permanent gekühlt. Beim Entfernen einer Schweißkappe wird ein im Stand der Technik im Zulauf vorgesehenes 2-2-Wege-Ventil auf ZU geschaltet, zugleich auch das Steuerventil im Rücklauf. Zudem wird eine Wasseraufnahmevorrichtung, beispielsweise ein sich passiv aufweitender Expansionsraum, geöffnet, sodass Wasser aus dem Leitungsabschnitt zwischen den Steuerventilen im Zulauf und im Rücklauf aufgenommen wird. Damit kann aufgrund der sofortigen Druckreduzierung in der Kühlwasserleitung kein unter hohem Druck stehendes Kühlmittel austreten.

In der DE 20 2007 011 304 U1 ist eine Schweißkappen-Kühlwassersteuerung mit einem Kühlmittelzulauf zu und einem Kühlmittekrücklauf von den Schweißkappen einer Schweißvorrichtung gezeigt. Die Vorrichtung hat zwei Ventile zum Absperren eines Teils des Kühlkreislaufs, in dem sich die Schweißkappen befinden, sowie eine Steuerung zur Ansteuerung der Ventile. Diese Druckschrift offenbart die Merkmale des Oberbegriffes des Anspruchs 1.

Aus der DE 10 2013 200 994 A1 und der WO 88/09574 A2 sind weitere Schweißkappen-Kühlwassersteuerungen bekannt.

Aufgabe der Erfindung ist es, ohne erwähnenswerten finanziellen Mehraufwand die Kühlwassersteuerung zu verbessern.

Dies wird bei einer Schweißkappen-Kühlwassersteuerung nach Anspruch 1 dadurch erreicht, dass im Kühlwasserzulauf oder -rücklauf ein elektronisch gesteuertes Durchflussregelventil sitzt. Das Durchflussregelventil weist dabei ein Schließelement mit einem Regelkegel auf, der zur Spitze des Schließelements konisch zuläuft. Der Regelkegel hat eine spezielle Form, die einen charakteristischen Durchfluss-Weg ergibt. Damit ist der Regelkegel auf bestimmte Durchflusscharakteristika ausgelegt und optimiert, die sich durch die Axialbewegung des Schließelements in einer Regelöffnung des Durchflussregelventils ergibt. Dieses Durchflussregelventil regelt die Kühlwassermenge, die zur Schweißkappe oder den Schweißkappen fließt. Das elektronisch gesteuerte Durchflussregelventil ersetzt das bisher im Zulauf sitzende Steuerventil und schafft es, den Wasserverbrauch zu reduzieren, weil tatsächlich nur die Kühlwassermenge hindurchgepumpt wird, die zur optimalen Kühlung notwendig ist. Auch die Umwälzpumpenleistung kann reduziert werden, bei gleichzeitig reduziertem Serviceaufwand. Darüber hinaus werden die bislang im Kühlwasserkreislauf notwendigen und vorkommenden sogenannten Schließschläge vermieden. Diese durch den abrupten Schaltvorgang eines Steuerventils auftretenden Schläge in der Kühlwasserleitung konnten auch einen Schweißkappenverlust hervorrufen, was durch die erfindungsgemäße Schutzkappen-Kühlwassersteuerung vermieden wird. Durch das Durchflussregelventil steht der Schweißkappe oder stehen den mehreren Schweißkappen, die von einer Kühlleitung gekühlt werden, von Anfang an die exakten, notwendigen Kühlwassermengen zur Verfügung, obwohl der Leitungswiderstand und/oder Systemdruck ständig geändert werden. Dies ist insbesondere dann der Fall, wenn die Schweißkappe auf einem Roboter sitzt, der mit flexiblen Kühlschläuchen gekoppelt wird oder beispielsweise weitere Anlagen zu- oder abgeschaltet werden. Diese Kühlschläuche werden bei den Bewegungen des Roboters gebogen, gegebenenfalls gestaucht, sodass die Kühlwasserleitung unterschiedliche Widerstände während des Betriebs hat. Diese Widerstände werden durch das Durchflussregelventil sofort ausgeglichen.

Aufgrund der im Durchschnitt geringeren Pumpenleistung können kostengünstigere Pumpen eingebaut werden, und im Dauerlauf kann der Stromverbrauch reduziert werden. Durch die reproduzierbare Kühlleistungszuführung kann auch die Schweißqualität nachhaltig verbessert werden und permanent auf hohem Niveau bleiben.

Vorzugsweise ist eine Steuerungseinheit vorgesehen, die mit dem zumindest einen Durchflusssensor, dem Steuerventil und dem Durchflussregelventil gekoppelt ist und diese steuert oder von diesen Daten aufnimmt. Hierdurch ist es möglich, dass der ohnehin vorgesehene Durchflusssensor für die Steuerung des Durchflussregelventils herangezogen wird, sodass auch hier kein Mehraufwand getrieben werden muss.

Der Durchflusssensor sitzt, wie gesagt, insbesondere in der Rücklaufleitung und kann die Durchströmmenge, die Wassertemperatur und/oder den Druck detektieren. Über den Durchflusssensor können dann auch Veränderungen im Druck bzw. Durchfluss sofort detektiert werden, die gegebenenfalls auch auf ein Leck in der Kühlwasserleitung schließen lassen. Die Steuerung ist dabei so programmiert, dass sie ab Unterschreiten eines vorbestimmten Drucks oder Durchflusses auf ein solches Leck schließt und damit einen Alarm auslöst. Bisher vorgesehene zusätzliche Vorrichtungen, die ein solches Leck detektierten und anzeigten, sind jetzt überflüssig, denn ein solches Alarmsystem ist einfach steuerungstechnisch in der erfindungsgemäßen Kühlwassersteuerung realisierbar.

Ferner sollte eine schaltbare Wasseraufnahmevorrichtung vorhanden sein, die bei Kappenwechsel elektrisch betätigbar und Kühlwasser aus einem Leitungsabschnitt zwischen dem Durchflussregelventil und dem Steuerventil aufnimmt. Dies dient, wie gesagt, dazu, eine sofortige Druckreduzierung in der Kühlwasserleitung herbeiführen zu können.

Die Wasseraufnahmevorrichtung umfasst einen Expansionsraum, der eine bewegliche Wand besitzt, die insbesondere mit einem einstellbaren Gegendruck zum Wasserdruck im Leitungsabschnitt beaufschlagbar ist. Im einfachsten Fall ist der Expansionsraum Teil einer Kolben-Zylinder-Einheit, wobei der Expansionsraum auf einer Seite des Kolbens liegt und der Gegendruck in dem Raum auf der anderen Seite des Kolbens aufgebaut wird. Dies kann beispielsweise dadurch erfolgen, dass eine hydraulische oder pneumatische Leitung in diesen Raum mündet, wobei hier auch vorzugsweise ein einstellbares Drosselventil vorgesehen sein kann und/oder ein Vorschaltventil. Dadurch lässt sich der Gegendruck einfach einstellen.

Alternativ hierzu könnte auch eine aktive Wasseraufnahmevorrichtung angekoppelt sein, die durch einen motorisch angetriebenen Kolben oder einen durch Unterdruck beweglichen Kolben oder einen hydraulisch oder pneumatisch angetriebenen Kolben umfasst. Dieser Kolben wird aktiv bewegt, wenn es zu einer Leckage kommt, sodass er Kühlwasser aus der Kühlwasserleitung saugt.

Die Steuerungseinheit ist vorzugsweise so ausgebildet und programmiert, dass Zulaufseitig nur das Durchflussregelventil bei Kappenwechsel und/oder Leckage in der Kühlwasserleitung elektrisch geschaltet wird, um den Zulauf von Kühlwasser zu stoppen. Zusätzliche Steuerventile sind damit überflüssig. Das Durchflussregelventil wird einfach auf ZU geschaltet.

Die erfindungsgemäße Kühlwassersteuerung ist so ausgebildet, dass sie auch mehrere Schweißkappen, die nacheinander strömungsdurchflossen werden, kühlt. Das Kühlmittel strömt also an oder durch mehrere Schweißkappen.

Das Durchflussregelventil steuert dabei für sämtliche in der Kühlwasserleitung vorgesehenen Schweißkappen die Kühlwassermenge, das heißt, es ist nur ein Durchflussregelventil gemäß einer vorzugsweisen Ausgestaltung der Erfindung vorgesehen. Dieses Durchflussregelventil sollte vor der ersten Schweißkappe angeordnet sein.

Ist das Durchflussregelventil im Rücklauf angeordnet, sollte im Zulauf ein Abschaltventil positioniert sein, das bei Schweißkappenwechsel wie das Durchflussregelventil schließt.

Es können ein oder mehrere Durchflusssensoren vorgesehen sein, beispielsweise insgesamt nur ein Durchflusssensor, der vor dem nach der letzten Schweißkappe sitzenden Steuerventil angeordnet ist, oder es können zwischen dem Durchflussregelventil und dem Steuerventil mehrere Durchflusssensoren vorhanden sein. Beispielsweise kann auch für jede Schweißkappe ein eigener Durchflusssensor eingesetzt werden, was im Normalfall jedoch unnötig ist.

Die Steuerungseinheit ist so ausgebildet, dass sie bei einem durch den Durchflusssensor erfassten Druckabfall unter einen vorbestimmten Wert das Regelventil aktiv ansteuert und schließt. Somit hat der Durchflusssensor mehrere Funktionen. Er dient dazu, den Durchfluss des Kühlwassers für die Anpassung der Durchflussmenge zu ermitteln. Zudem ist er Teil des Alarmsystems, welches eine Leckage aufdeckt.

Bei der Kühlwassersteuerung der vorliegenden Erfindung wird die Kühlwassermenge automatisch auch dann noch auf den optimalen Wert geregelt, wenn weitere Verbraucher hinzukommen, Verbraucher (Schweißroboter) deaktiviert sind oder die Kühlwasserleitung aufgrund von Bewegungen des Roboters andere Widerstände aufweist.

Das Durchflussregelventil kann stufenlos geöffnet und geschlossen werden, gegebenenfalls auch vollständig geschlossen werden.

Weitere Merkmale und Vorteile ergeben sich aus der nachfolgenden Beschreibung und aus der nachfolgenden Zeichnung, auf die Bezug genommen wird.
- Figur 1 zeigt ein Schaltbild der erfindungsgemäßen Schweißkappen-Kühlwassersteuerung,
Figur 2 zeigt eine Schnittansicht durch das Durchflussregelventil, welches bei der erfindungsgemäßen Schweißkappen-Kühlwassersteuerung eingesetzt wird, und
die Figuren 3 bis 5 zeigen aufeinanderfolgende Stadien bei der Bewegung des Durchflussregelventils nach Figur 2 von der offenen in die teilweise offene und schließlich in die geschlossene Stellung.

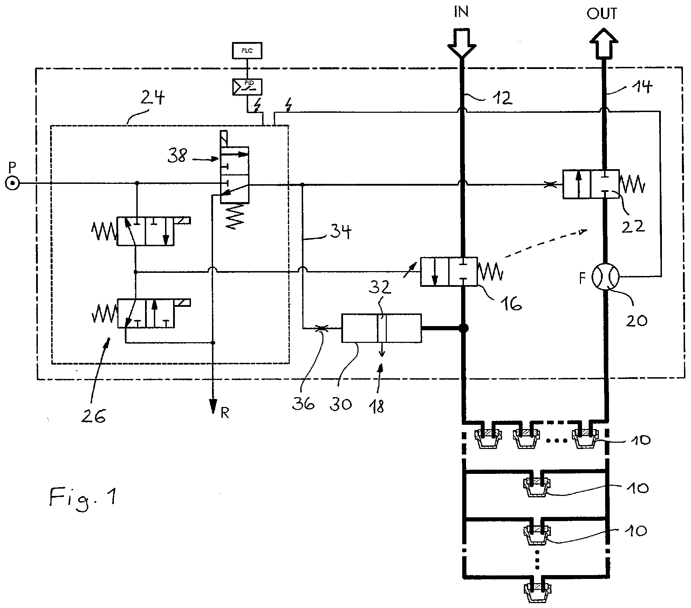

In Figur 1 ist eine Schutzkappen-Kühlwassersteuerung für eine oder mehrere Schweißkappen 10, die an einem Schweißroboter bzw. mehreren Schweißrobotern sitzen, dargestellt. Beispielhaft sind Reihen- und Parallelanordnungen von Schweißkappen dargestellt. Eine Kühlwasserleitung ist als Kreislauf ausgeführt und umfasst einen Kühlwasserzulauf 12 sowie einen Kühlwasserrücklauf 14, die zu bzw. weg von den Schweißkappen 10 führen.

Sind mehrere Schweißkappen 10 vorhanden, die mit einer Schweißkappen-Kühlwassersteuerung gekühlt werden, so ergibt sich strömungstechnisch vorzugsweise eine Reihenschaltung der Schweißkappen 10 in der Kühlwasserleitung.

Im Kühlwasserzulauf 12 sitzt ein elektronisch betätigbares und steuerbares Durchflussregelventil 16, und zwar vor der ersten Schweißkappe 10. Zwischen der ersten Schweißkappe 10 und dem Durchflussregelventil 16 zweigt vom Kühlwasserzulauf eine zu einer Wasseraufnahmevorrichtung 18 führende Leitung (Blindleitung) ab. Optional kann das Durchflussregelventil 16 im Rücklauf 14 sitzen, wie mit dem mit unterbrochenen Linien gezeigten Pfeil symbolisiert. An der Position des Durchflussregelventils 16 im Zulauf 12 ist ein Abschaltventil angeordnet.

Nach der letzten Schweißkappe 10 ist ein Durchflusssensor 20 in der Kühlwasserrücklaufleitung 14 angeordnet, und nach dem Durchflusssensor ein elektrisch schaltbares Steuerventil 22, hier ein 2-2-Wege-Ventil. Dieses Steuerventil ist federbelastet, und zwar in eine geschlossene Position. Natürlich könnte bei Energieausfall auch eine offene Stellung vorgesehen sein.

Steuerungsseitig ist eine sogenannte PLC, auch SPS genannt, mit einem nachgeschalteten PID-Regler gekoppelt. Vorzugsweise wird die PLC anlagenseitig, das heißt vom Anlagenbetreiber, gestellt, wogegen die PID mit einer Steuerungseinheit 24 der Kühlwassersteuerung gekoppelt ist oder einen Teil derselben bildet.

Das Durchflussregelventil 16, die Wasseraufnahmevorrichtung 18, der Durchflusssensor 20 sowie das Steuerventil 22 sind mit der Steuerungseinheit 24 elektrisch gekoppelt und senden Daten bzw. erhalten Steuerdaten von der Steuerungseinheit 24. Die entsprechende Leitungsführung ist in Figur 1 dargestellt.

Die Steuerungseinheit 24 steuert beispielsweise Hydraulik- oder Pneumatikventile 26, die wiederum das Durchflussregelventil 16 ansteuern.

Darüber hinaus wird die Wasseraufnahmevorrichtung 18 gesteuert. Im dargestellten Ausführungsbeispiel umfasst die Wasseraufnahmevorrichtung 18 einen Zylinder 30, in dem sich ein verschiebbarer Kolben 32 als bewegliche Wand befindet. Der rechte, vom Kolben 32 im Zylinder 30 abgetrennte Raum ist mit dem Kühlwasserzulauf 12 gekoppelt, und der entgegengesetzte Raum mit einer Leitung 34, in der eine Drossel 36 sitzt. Die Leitung 34 führt zu einem Vorsteuerventil 38, welches die Leitung 34 entweder zur Umgebung öffnet oder von ihr abtrennt. Die Leitung 34 wird entweder druckbeaufschlagt oder entlüftet.

Abhängig von den Daten, die der Durchflusssensor 20 liefert, steuert die Steuerungseinheit 24 das Durchflussregelventil 16 an, um dieses proportional zu öffnen oder zu schließen.

Das Durchflussregelventil 16 kann stufenlos geöffnet und geschlossen werden, gegebenenfalls auch vollständig geschlossen werden.

Abhängig vom Widerstand in der Kühlwasserleitung, von der Anzahl der zu kühlenden Schweißkappen 10 und auch von der Kühlwassertemperatur (insbesondere in der Rücklaufleitung), wird der optimale Kühlwasserdurchfluss im Durchflussregelventil 16 eingestellt.

Eine nicht dargestellte, aber auch über die Steuerungseinheit 24 angesteuerte Pumpe kann zusätzlich stufenlos stärker oder weniger stark betrieben werden, um Kühlwasser durch die Kühlwasserleitung strömen zu lassen.

Nicht dargestellt sind in diesem Zusammenhang auch eventuelle Temperatursensoren, die möglichst im oder in der Nähe des Durchflusssensors 20 angeordnet sind, sodass nicht nur die Strömungsmenge, sondern auch die Temperatur des Kühlwassers detektiert und in der Steuerungseinheit 24 zur Einstellung des Durchflussregelventils 16 berücksichtigt wird.

Wird eine Leckage durch abrupten Durchflussrückgang, beispielsweise im Durchflusssensor 20, detektiert, steuert die Steuereinheit 24 sofort das Durchflussregelventil 16 an, das dafür verantwortlich ist, vorzugsweise alleine dafür verantwortlich ist, den Zufluss von Kühlmittel zu den Schweißkappen 10 zu unterbinden. Entsprechend wird auch das Steuerventil 22 auf ZU geschaltet.

Im Falle eines Druckabfalls wird ferner das Vorsteuerventil 38 angesteuert, welches den Raum links vom Kolben 32 mit der Umgebung koppelt, sodass der Überdruck im Leitungsabschnitt zwischen dem Durchflussregelventil 16 und dem Steuerventil 22 dazu führt, dass der Kolben 32 nach links gedrückt wird. Druckspitzen werden somit sofort abgebaut.

Der im linken Raum im Zylinder 30 vorhandene Druckverlauf ist einstellbar, nämlich über die Drossel 36, gegebenenfalls auch über ein Regelventil als Vorsteuerventil 38.

Werden mehr Schweißkappen 10 angeschlossen, wird über den Durchflusssensor 20 oder über die mehreren Sensoren an dieser Stelle detektiert, dass mehr Kühlleistung zur Verfügung gestellt werden muss, und die Steuerungseinheit 24 steuert das Regelventil 16 und gegebenenfalls die Pumpe entsprechend an, um mehr Kühlwasser zuzuführen.

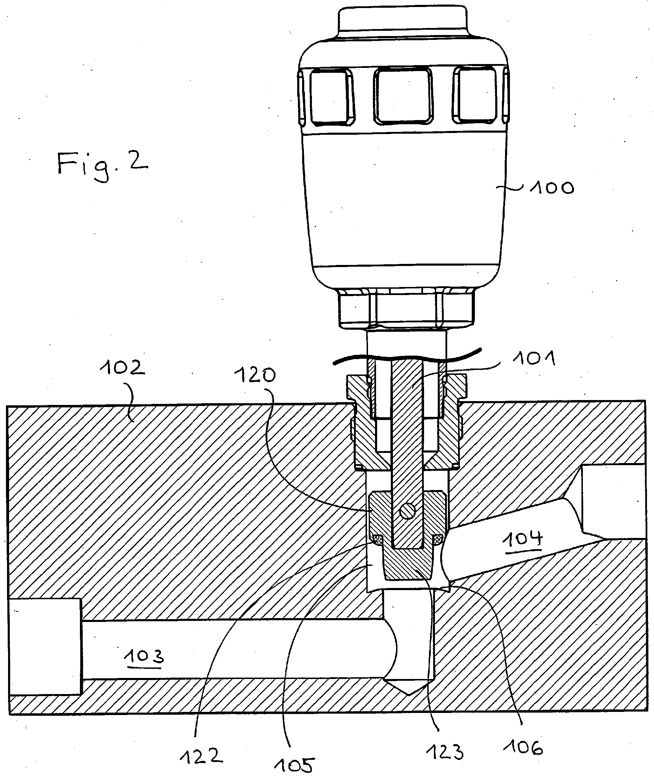

Die Figuren 2-5 zeigen das Durchflussregelventil 16 in verschiedenen Bewegungsstadien.

Es handelt sich beim Durchflussregelventil 16 um ein elektronisch gesteuertes Ventil, welches einen steuerbaren elektrischen Antrieb 100 aufweist, der eine lineare bewegliche Spindel 101 stufenlos axial verschieben kann.

Die Spindel 101 bewegt sich in einem hier symbolisch als Block dargestellten Ventilgehäuse 102, welches von Strömungskanälen 103,104 durchsetzt wird. An der Spindel 101 ist ein Schließelement 120 angebracht, welches eine Strömungsverbindung zwischen den ineinander übergehenden Strömungskanälen 103 und 104 mehr oder weniger freigibt oder schließt. Dies erfolgt stufenlos.

Das Ventil umfasst eine sogenannte Regelöffnung 105, in der sich das Schließelement 120 bewegen kann. An einem Rand, genauer gesagt an einer Art Schulter der Regelöffnung 105 ist ein Ventilsitz 106 ausgebildet.

Am Schließelement 120 ist ein Dichtelement 122 angebracht, hier in Form eines O-Rings. Ferner ist ein so genannter Regelkegel 123 ausgeformt, der zur Spitze des Schließelements 120 konisch zuläuft. Der Regelkegel 123 hat eine spezielle Form, die einen charakteristischen Durchfluss-Weg ergibt. Damit ist der Regelkegel 123 auf bestimmte Durchflusscharakteristika ausgelegt und optimiert, die sich durch die Axialbewegung des Schließelements 120 in der Regelöffnung 105 ergibt.

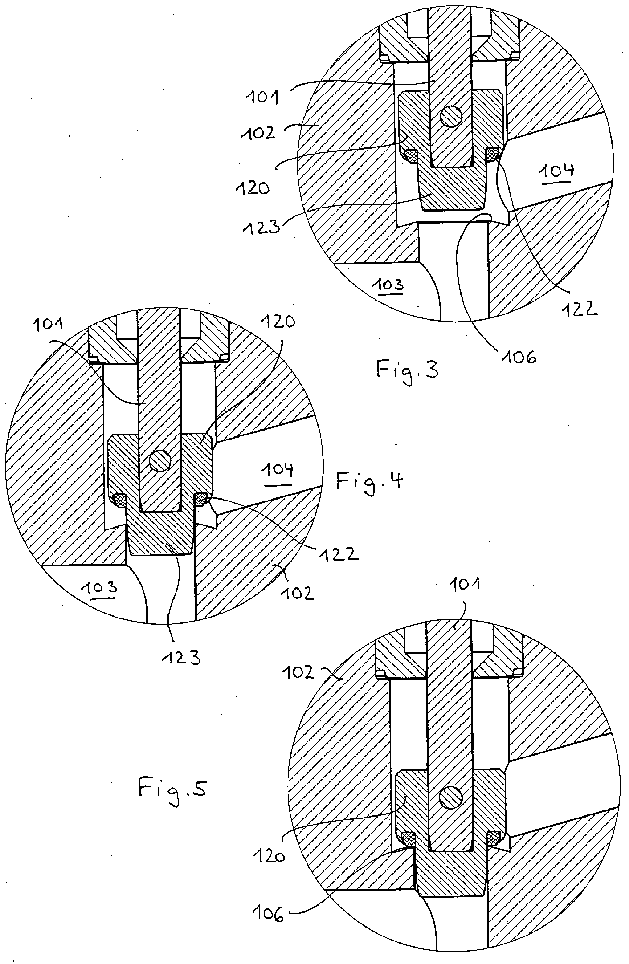

Im gezeigten Ausführungsbeispiel ist die sogenannte Regelgüte auf kleine durch Flüsse hin optimiert. In Figur 4 ist ein solcher kleiner Durchfluss möglich. Dies zeigt sich dadurch, dass der freigegebene Strömungsquerschnitt beim Öffnen des Ventils nur langsam erhöht wird. Erst wenn der Regelkegel 123 noch zu ca. 30-50 % seiner axialen Länge in der Regelöffnung 105 eintaucht, ändert sich der freie Strömungsquerschnitt deutlich. Wird das Ventil geschlossen, liegt der dass Dichtelement 122, wie dies in Figur 5 gezeigt ist, am Ventilsitz 106 an und trennt die Strömungskanäle 103 und 104 fluiddicht.

Der Antrieb 100 ist ein elektromotorischer oder pneumatischer Antrieb. Die Schweißkappen-Kühlwassersteuerung kann die üblichen Schwankungen im Kühlwassersystem fortlaufend ausgleichen, sodass stets ein optimales Schweißergebnis erreicht wird. Mit dem dargestellten Durchflussregelventil 16 kann das Kühlsystem laufend passend zu den Schweißparametern (Stromstärke, Blechdicke, Anzahl der Blechlagen, Material, Schweißgüte usw.) optimal eingestellt werden. Zudem kann durch die aktive Regelung des Durchflusses eine Diagnose des Kühlwassersystems durchgeführt werden. Es kann auch der Verschleiß der Schweißkappen über die Stellung des Schließelements 120 bzw. durch die Sollwertvorgabe des Durchflussregelventils diagnostiziert werden.

## Patentansprüche

1. Schweißkappen-Kühlwassersteuerung, mit einer Kühlwasserleitung, die einen in Richtung zu zumindest einer Schweißkappe (10) führenden Kühlwasserzulauf (12) und einen von der zumindest einen Schweißkappe (10) wegführenden Kühlwasserrücklauf (14) aufweist, wobei im Kühlwasserrücklauf (14) ein schaltbares Steuerventil (22) zum Verschließen des Kühlwasserrücklaufs (14) bei Kappenwechsel sowie zumindest ein Durchflusssensor (20) vorgesehen sind, **dadurch gekennzeichnet, dass** im Kühlwasserzulauf (12) oder Kühlwasserrücklauf (14) ein elektronisch gesteuertes Durchflussregelventil (16) sitzt, wobei das Durchflussregelventil (16) ein Ventilgehäuse (102) mit ineinander übergehenden Strömungskanälen (103, 104), eine lineare bewegliche Spindel (101) mit einem Schließelement (120), ein am Schließelement (120) angebrachtes Dichtelement (122) und einen steuerbaren elektrischen Antrieb (100) aufweist, wobei das Durchflussregelventil (16) eine Regelöffnung (105), in der sich das Schließelement (120) bewegen kann, mit einem Ventilsitz (106) hat, wobei die Spindel (101) mittels des elektrischen Antriebs (100) stufenlos axial verschiebbar ist, so dass das Schließelement (120) eine Strömungsverbindung zwischen den ineinander übergehenden Strömungskanälen (103, 104) stufenlos mehr oder weniger freigibt oder schließt, und wobei das Schließelement (120) einen Regelkegel (123) aufweist, der zur Spitze des Schließelements (120) konisch zuläuft.

2. Schweißkappen-Kühlwassersteuerung nach Anspruch 1, **dadurch gekennzeichnet, dass** eine Steuerungseinheit (24) vorgesehen ist, die mit dem Durchflusssensor (20), dem Steuerventil (22) und dem Durchflussregelventil (16) gekoppelt ist und diese steuert oder Daten von diesen aufnimmt.

3. Schweißkappen-Kühlwassersteuerung nach Anspruch 2, **dadurch gekennzeichnet, dass** die Steuerungseinheit (24) einen PID-Regler aufweist.

4. Schweißkappen-Kühlwassersteuerung nach einem der vorhergehenden Ansprüche, **dadurch gekennzeichnet, dass** eine schaltbare Wasseraufnahmevorrichtung (18) vorhanden ist, die bei Kappenwechsel elektrisch betätigbar ist und Kühlwasser aus einem Leitungsabschnitt zwischen dem Durchflussregelventil (16) und dem Steuerventil (22) aufnimmt.

5. Schweißkappen-Kühlwassersteuerung nach Anspruch 4, **dadurch gekennzeichnet, dass** die Wasseraufnahmevorrichtung (18) einen Expansionsraum aufweist, der eine bewegliche Wand besitzt, die insbesondere mit einem einstellbaren Gegendruck zum Wasserdruck des Kühlwassers im Leitungsabschnitt beaufschlagbar ist.

6. Schweißkappen-Kühlwassersteuerung nach Anspruch 4 oder 5, **dadurch gekennzeichnet, dass** die Wasseraufnahmevorrichtung (18) mit einem Vorsteuerventil (38) beaufschlagt ist.

7. Schweißkappen-Kühlwassersteuerung nach einem der vorhergehenden Ansprüche, soweit auf Anspruch 2 rückbezogen, **dadurch gekennzeichnet, dass** die Steuerungseinheit (24) so ausgebildet und programmiert ist, dass zulaufseitig nur das Durchflussregelventil bei Kappenwechsel und/oder bei Leckage in der Kühlwasserleitung elektrisch geschaltet wird, um den Zulauf von Kühlwasser zu der wenigstens einen Schweißkappe zu stoppen.

8. Schweißkappen-Kühlwassersteuerung nach einem der vorhergehenden Ansprüche, **dadurch gekennzeichnet, dass** die Kühlwasserleitung an mehreren Schweißkappen (10) nacheinander entlangführt, um diese zu kühlen.

9. Schweißkappen-Kühlwassersteuerung nach Anspruch 8, **dadurch gekennzeichnet, dass** nur ein Durchflussregelventil (16) vorhanden ist, das insbesondere im Zulauf zur ersten Schweißkappe (10) angeordnet ist.

10. Schweißkappen-Kühlwassersteuerung nach einem der vorhergehenden Ansprüche, **dadurch gekennzeichnet, dass** mehrere Schweißkappen (10) über die Kühlwasserleitung gekühlt werden und dass insgesamt nur ein einziger oder mehrere Durchflusssensoren vorhanden sind oder dass stromabwärts insbesondere jeder Schweißkappe (10) ein zugeordneter Durchflusssensor (20) vorhanden ist, wobei die Steuerungseinheit (24) so ausgebildet ist, dass bei durch den zumindest einen Durchflusssensor (20) detektiertem Druckabfall unter einen vorbestimmten Druck das Durchflussregelventil (16) geschlossen wird.

## Claims

1. A welding cap cooling water control system, comprising a cooling water conduit which includes a cooling water inflow (12) leading towards at least one welding cap (10) and a cooling water return flow (14) leading away from the at least one welding cap (10), wherein a switchable control valve (22) for closing the cooling water return flow (14) during a cap change and at least one flow sensor (20) are provided in the cooling water return flow (14), **characterized in that** an electronically controlled flow control valve (16) is seated in the cooling water inflow (12) or the cooling water return flow (14), the flow control valve (16) including a valve housing (102) having flow ducts (103, 104) that continue into each other, a linearly movable spindle (101) having a closing element (120), a sealing element (122) attached to the closing element (120), and a controllable electric drive (100), the flow control valve (16) having a control opening (105) in which the closing element (120) can move, with a valve seat (106), the spindle (101) being continuously axially displaceable by means of the electric drive (100) so that the closing element (120) continuously opens or closes to a greater or lesser extent a fluid communication between the flow ducts (103, 104) that continue into each other, and the closing element (120) including a control cone (123) that conically tapers towards the tip of the closing element (120).

2. The welding cap cooling water control system according to claim 1, **characterized in that** a control unit (24) is provided which is coupled to and controls, or acquires data from, the flow sensor (20), the control valve (22) and the flow control valve (16).

3. The welding cap cooling water control system according to claim 2, **characterized in that** the control unit (24) includes a PID controller.

4. The welding cap cooling water control system according to any of the preceding claims, **characterized in that** a switchable water intake device (18) is provided, which in the case of a cap change is actuatable electrically and takes up cooling water from a conduit portion between the flow control valve (16) and the control valve (22).

5. The welding cap cooling water control system according to claim 4, **characterized in that** the water intake device (18) includes an expansion space which has a movable wall to which, in particular, an adjustable counterpressure to the water pressure of the cooling water in the conduit portion can be applied.

6. The welding cap cooling water control system according to claim 4 or 5, **characterized in that** the water intake device (18) is acted upon by a pilot valve (38).

7. The welding cap cooling water control system according to any of the preceding claims, as far as dependent on claim 2, **characterized in that** the control unit (24) is configured and programmed such that on the inflow side only the flow control valve is electrically switched in the case of a cap change and/or in case of a leakage in the cooling water conduit, in order to stop the inflow of cooling water to the at least one welding cap.

8. The welding cap cooling water control system according to any of the preceding claims, **characterized in that** the cooling water conduit extends along a plurality of welding caps (10) in succession to cool them.

9. The welding cap cooling water control system according to claim 8, **characterized in that** only one flow control valve (16) is provided which, in particular, is arranged in the inflow to the first welding cap (10).

10. The welding cap cooling water control system according to any of the preceding claims, **characterized in that** a plurality of welding caps (10) are cooled by means of the cooling water conduit and **in that** in total only one single or a plurality of flow sensors are provided, or **in that** an associated flow sensor (20) is provided downstream of, in particular, each welding cap (10), the control unit (24) being configured such that in case of a pressure drop below a predetermined pressure detected by the at least one flow sensor (20), the flow control valve (16) is closed.

## Revendications

1. Commande d'eau de refroidissement de capuchon de soudage, comprenant une conduite d'eau de refroidissement qui présente une amenée (12) d'eau de refroidissement menant vers au moins un capuchon de soudage (10), et un retour (14) d'eau de refroidissement menant en éloignement dudit au moins un capuchon de soudage (10), une vanne de commande (22) commutable pour obturer le retour (14) d'eau de refroidissement lors d'un changement de capuchon et au moins un capteur de débit (20) étant prévus dans le retour (14) d'eau de refroidissement, **caractérisée en ce qu'**une vanne de régulation de débit (16) à commande électronique est logée dans l'amenée (12) d'eau de refroidissement ou dans le retour (14) d'eau de refroidissement, la vanne de régulation de débit (16) comportant un boîtier de vanne (102) qui présente des canaux d'écoulement (103, 104) qui se fondent les uns dans les autres, une tige mobile linéaire (101) qui présente un élément de fermeture (120), un élément d'étanchéité (122) monté sur l'élément de fermeture (120), et un entraînement électrique (100) commandable, la vanne de régulation de débit (16) comportant une ouverture de régulation (105), dans laquelle l'élément de fermeture (120) peut se déplacer, qui présente un siège de vanne (106), la tige (101) étant apte à être axialement déplacée en continu au moyen de l'entraînement électrique (100), de sorte qu'une liaison d'écoulement entre les canaux d'écoulement (103, 104) qui se fondent les uns dans les autres est plus ou moins ouverte ou fermée en continu par l'élément de fermeture (120), et l'élément de fermeture (120) présentant un cône de régulation (123) qui s'effile vers la pointe de l'élément de fermeture (120).

2. Commande d'eau de refroidissement de capuchon de soudage selon la revendication 1, **caractérisée en ce qu'**il est prévu une unité de commande (24) qui est couplée au capteur de débit (20), à la vanne de commande (22) et à la vanne de régulation de débit (16) et les commande ou reçoit des données de ceux-ci.

3. Commande d'eau de refroidissement de capuchon de soudage selon la revendication 2, **caractérisée en ce que** l'unité de commande (24) présente un régulateur PID.

4. Commande d'eau de refroidissement de capuchon de soudage selon l'une des revendications précédentes, **caractérisée en ce qu'**un dispositif de réception d'eau (18) commutable est présent, lequel est apte à être actionné électriquement lors d'un changement de capuchon et reçoit de l'eau de refroidissement provenant d'un tronçon de conduite entre la vanne de régulation de débit (16) et la vanne de commande (22).

5. Commande d'eau de refroidissement de capuchon de soudage selon la revendication 4, **caractérisée en ce que** le dispositif de réception d'eau (18) présente un espace d'expension qui comporte une paroi mobile qui est en particulier apte à être sollicitée par une contre-pression ajustable par rapport à la pression d'eau de l'eau de refroidissement dans le tronçon de conduite.

6. Commande d'eau de refroidissement de capuchon de soudage selon la revendication 4 ou 5, **caractérisée en ce que** le dispositif de réception d'eau (18) est sollicité par une vanne pilote (38).

7. Commande d'eau de refroidissement de capuchon de soudage selon l'une des revendications précédentes, lorsqu'elle dépend de la revendication 2, **caractérisée en ce que** l'unité de commande (24) est réalisée et programmée de telle sorte que du côté amenée, seule la vanne de régulation de débit est commutée électriquement lors d'un changement de capuchon et/ou d'une fuite dans la conduite d'eau de refroidissement pour arrêter l'amenée d'eau de refroidissement vers ledit au moins un capuchon de soudage.

8. Commande d'eau de refroidissement de capuchon de soudage selon l'une des revendications précédentes, **caractérisée en ce que** la conduite d'eau de refroidissement s'étend successviement le long de plusieurs capuchons de soudage (10) pour les refroidir.

9. Commande d'eau de refroidissement de capuchon de soudage selon la revendication 8, **caractérisée en ce qu'**une seule vanne de régulation de débit (16) est présente, laquelle est en particulier agencée dans l'amenée vers le premier capuchon de soudage (10).

10. Commande d'eau de refroidissement de capuchon de soudage selon l'une des revendications précédentes, **caractérisée en ce que** plusieurs capuchons de soudage (10) sont refroidis par la conduite d'eau de refroidissement et **en ce qu'**au total, un seul ou plusieurs capteurs de débit sont présents, ou **en ce qu'**un capteur de débit (20) associé est présent en aval en particulier de chaque capuchon de soudage (10), l'unité de commande (24) étant réalisée de telle sorte que la vanne de régulation de débit (16) est fermée lors d'une chute de pression, détectée par ledit au moins un capteur de débit (20), au-dessous d'une pression prédéterminée.
